# EUROPEAN PATENT APPLICATION

(11) **EP 2 096 870 A2**
(43) Date of publication of application: **02.09.2009**
(21) Application number: 08013287.1
(22) Date of filing: 23.07.2008
(51) Int. Cl.: H04N 7/26, H04N 7/50, H04N 13/00

(54) **Systems and methods for processing multiple projections of video data in a single video file**

(30) Priority: 28.02.2008 US 39253
(71) Applicant: Seiko Epson Corporation, Shinjuku-ku Tokyo 163-0811 (JP)
(72) Inventor: Swaminathan, Vasanth, Mississauga Ontario, L5M 4K8 (CA); Sellers, Graham, Toronto Ontario, M4J 4L7 (CA)
(74) Representative: Grünecker, Kinkeldey, Stockmair & Schwanhäusser Anwaltssozietät

(57) **Abstract**

Methods and systems for processing a plurality of video streams are disclosed. One example method includes encoding a first video stream corresponding to a first projection of a scene and encoding a second video stream corresponding to a second projection of the scene. Due to similarities in the spatially proximate projections, the encoded second video stream may be compressed more than the encoded first video stream. Moreover, the first encoded video stream may be stored in a primary data field of a video file and the second encoded video stream may be stored in a supplemental data field of the video file.

## Description

### BACKGROUND

### 1. The Field of the Invention

The present invention relates to encoding video streams. More specifically, embodiments of the present invention relate to methods and systems for encoding video streams in a single video file for later recombination on a multi-view display.

### 2. The Relevant Technology

Traditional three-dimensional (3-D) displays are typically viewed through special polarized glasses or shutter glasses. However, requiring the use of special glasses can be burdensome in certain circumstances. One attractive alternative to a traditional 3-D display is an autostereoscopic display. Autostereoscopic displays present 3-D still images or video without the need to be viewed through special glasses or any other special viewing equipment.

In order for autostereoscopic displays to present a video in 3-D, multiple 2-D video projection files-each corresponding to a slightly different viewpoint of a scene- are typically combined into a single interleaved video file. Each video projection file contains frames that are spatially shifted a small degree with respect to the frames of the other projection files. Moreover, each of the original video projection files includes an identical number of frames such that each frame from one video projection file corresponds to a frame from each of the other video projection files. The frames are displayed, for example, at a frame rate of about 29 frames per second. The precise format of an interleaved video file may differ between different autostereoscopic displays. Regardless of the format, interleaved video files tend to be extremely large, and it is generally desirable to compress an interleaved video file prior to transmitting the interleaved video file to an autostereoscopic display.

One common type of video compression is MPEG-2 video compression. Under the MPEG-2 standard each of the original frames of a video file are compressed into one of three types of compressed frames, namely, an Intra Frame (1-frame), a Predicted Frame (P-frame), or a Bidirectional Frame (B-frame).

An 1-frame is encoded independently of all other frames in an MPEG-2 video file, whereas P and B-frames are dependent frames, that is, frames that are encoded using at least one other frame as a reference. For example, a P-frame is encoded using a preceding frame, such as an 1-frame or another P-frame, as a reference. Because many pixels in a given frame typically do not change with respect to temporally proximate frames, a P-frame may simply refer to a previous frame for those pixels and may use vectors to represent the motion of the remaining pixels. Thus, because of the similarities in frames that are close in time, P-frames can attain more compression than is possible with I-frames. A B-frame is similar to a P-frame but may attain even higher compression by referencing frames in both directions of time for its data, i.e., a preceding I-frame or P-frame and a subsequent I-frame or P-frame. Computation time for a B-frame is typically larger, however, than for a P-frame. The number of P-frames and/or B-frames in a given MPEG-2 video file may vary. However, to ensure a minimum level of quality, I-frames are typically repeated in a video file at a certain minimum frequency. Moreover, each I-frame may potentially serve as a random access point in a compressed video file.

Autostereoscopic displays typically require image data to be presented in a vendor-specific interleaved format. However, if video projection streams are interleaved prior to MPEG encoding, the interleaved layout is normally lost and therefore inoperable for use by an autostereoscopic display. Moreover, individual projections cannot be processed after they are interleaved. Thus, the multiple video projection streams are typically encoded separately and subsequently combined in an interleaved format for use with an autostereoscopic display.

One solution to providing multiple video streams to the autostereoscopic display is to encode the multiple video projection streams as separate files or containers and then send the multiple video files to the autostereoscopic display. This solution can be problematic because the multiple video files must be separately received by the autostereoscopic display and require large storage space, resulting in high transmission latency. Another solution to providing multiple compressed video projection files to the autostereoscopic display is to combine the corresponding frames from each of the multiple video projection streams in a side-by-side arrangement. The resulting streams may then be stored as a single video file. This solution can also be problematic, however, because it is not backwards compatible with non-autostereoscopic displays. For example, a standard, non-autostereoscopic display would display each of the original frames simultaneously to users in the side-by-side arrangement. Moreover, resolution is lost by combining multiple original frames into a single combined frame.

### BRIEF SUMMARY

In general, embodiments of the invention are directed to methods and systems for storing multiple projections of video data in a single video file, such as an MPEG video file, for later recombination on an autostereoscopic display. Example embodiments of the proposed invention can be implemented with a modified MPEG encoder and a modified MPEG decoder to allow the encoding of multiple projections of video data in a single MPEG video file. For example, a disclosed embodiment includes creating a single MPEG-2 video file in which a first video stream corresponding to a first projection may be encoded and stored in a primary data field of the video file, and a second video stream corresponding to a second projection may be encoded in a supplemental data field, e.g., the user data field, of the video file. In addition, the encoded frames of the second stream may be compressed more than the corresponding encoded frames of the first stream. This advantageously results in a single MPEG-2 video file with improved data compression rates over the compression rates of separate MPEG video files. The approach is also advantageous in that it results in a video file in which the second stream stored in the user data fields may be ignored, making the video file backwards compatible with non-autostereoscopic displays.

One example embodiment of the present invention is directed to a method of processing a plurality of video streams. The method includes encoding a first video stream corresponding to a first projection of a scene and encoding a second video stream corresponding to a second projection of the scene. Due to similarities in the spatially proximate projections, the encoded second video stream may be compressed more than the encoded first video stream.

Another example embodiment is also directed to a method of processing a plurality of video streams. In this method, a first video stream corresponding to a first projection of a first scene is encoded and stored in a primary data field of a file. A second video stream a second video stream corresponding to a second projection of a second scene is encoded and stored in a supplemental data field of the file.

In an example embodiment directed to a video stream encoding system, an input port may be adapted to receive a plurality of video streams, each video stream corresponding to a different projection of a scene. The video stream encoding system may also include an encoder adapted to encode the plurality of video streams, compressing at least one of the video streams more than another at least one of the video streams.

Another example embodiment is directed to a video stream decoding system comprising a memory device and a decoder. The memory device may be adapted to store at least a portion of a file comprising a primary data field in which a first video stream corresponding to a first projection of a scene is stored and a supplemental data field in which a second video stream corresponding to a second projection of the scene is stored. The decoder may be adapted to decode the first and second video streams and to generate an output video stream based on the first and second decoded video streams.

This Summary is provided to introduce a selection of concepts in a simplified form that are further described below in the Detailed Description. This Summary is not intended to identify key features or essential characteristics of the claimed subject matter, nor is it intended to be used as an aid in determining the scope of the claimed subject matter.

Additional features will be set forth in the description which follows, and in part will be obvious from the description, or may be learned by the practice of the teachings herein. Features of the invention may be realized and obtained by means of the instruments and combinations particularly pointed out in the appended claims. Features of the present invention will become more fully apparent from the following description and appended claims, or may be learned by the practice of the invention as set forth hereinafter.

### BRIEF DESCRIPTION OF THE DRAWINGS

To further clarify the features of the present invention, a more particular description of the invention will be rendered by reference to specific embodiments thereof which are illustrated in the appended drawings. It is appreciated that these drawings depict only typical embodiments of the invention and are therefore not to be considered limiting of its scope. The invention will be described and explained with additional specificity and detail through the use of the accompanying drawings in which:

**Figure 1** illustrates a method for encoding multiple video streams and a corresponding video file format, in accordance with an embodiment of the present invention;

**Figure 2** illustrates, in the upper half, a block diagram of one example of an encoding system for encoding multiple video streams and, in the lower half, a block diagram of one example of a decoding system for decoding multiple video streams, in accordance with an embodiment of the present invention.

### DETAILED DESCRIPTION

In the following detailed description of various embodiments of the invention, reference is made to the accompanying drawings which form a part hereof, and in which are shown by way of illustration specific embodiments in which the invention may be practiced. It is to be understood that other embodiments may be utilized and structural changes may be made without departing from the scope of the present invention.

The following description provides example embodiments of methods and systems for encoding and decoding multi-view video streams. The methods and systems for encoding may be adapted to attain high levels of compression while maintaining each "view" or projection of a scene separate throughout the encoding process. Thus, a multi-view decoder or a single-view decoder may be used to decode the resulting file of video stream data and image processing may be performed on individual projections of a scene.

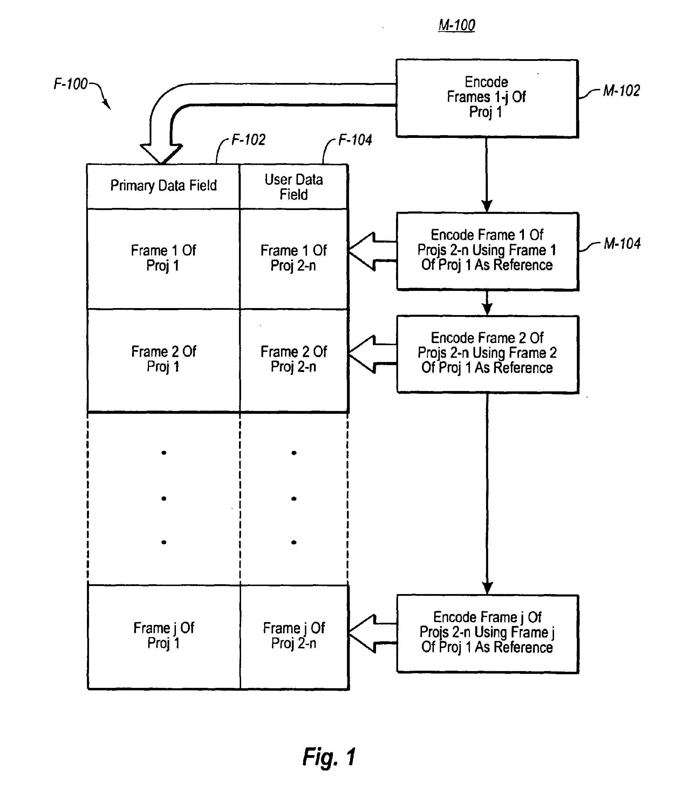

Figure 1 shows a method M-100 for encoding video streams of a plurality of projections of a scene and a corresponding structure of an encoded video file F-100. Method M-100 may encode the video streams such that file F-100 may be decoded by a standard single-view display or a multi-view display, such as an autostereoscopic display. Thus, the encoding is backwards compatible with standard displays.

The frames of a first video stream corresponding to a first projection ("projection one") may be encoded in a standard fashion, e.g., in accordance with MPEG-2 specifications (stage M-102), and stored in a primary data field F-102 of file F-100 (as indicated by the thick arrow flowing from stage M-102 to primary data field F-102). Primary data field F-102 may be a data field that a standard MPEG-2 single-view decoder would normally access to decode video stream data. Encoding the first video stream may be performed with a range of compression rates. However, a certain minimum level of quality may be ensured with a minimum number of I-frames interspersed at a minimum frequency in primary data field F-102. The I-frames also serve as random access points for skipping forward or back in the encoded video stream. Frames in between the interspersed I-frames may be encoded as more highly compressed P-frames and/or B-frames to reduce file size.

Next, using the encoded first frame of projection one as a reference frame, frame one of projection two may be encoded as well as frame one of any additional projections up to projection "n" (stage M-104). Using frame one of projection one as a reference may entail encoding frame one of projections two through "n" as P-frames and/or B-frames that reference frame one of projection one. As explained in the background section above, P and B-frames may use another temporally proximate I-frame or P-frame as a reference to attain high levels of compression because temporally proximate frames tend to be very similar. Because frames corresponding to different spatially proximate projections of a scene are also likely to be similar, encoding projections two through "n" as P and B-frames may achieve similar levels of compression. P-frames may reference a temporally corresponding I or P-frame of projection one while B-frames may additionally reference a frame that precedes or follows the temporally corresponding I or P-frame of projection one.

The resulting encoded frame(s) may be stored in a supplemental data field F-104 of file F-100, e.g., the user data field specified by the MPEG-2 standard. Remaining frames of projections two through "n" may be encoded in a similar fashion, i.e., using the corresponding frame of projection one as a reference frame. Thus, all frames stored in supplemental data field F-104 may be P-frames and/or B-frames, whereas at least some of the frames stored in primary data field F-102 are I-frames. As such, file F-100 is reduced in size as compared to a set of individual files in which each projection is encoded separately. If more than one projection is encoded and stored in user data field F-104 the frames may be indexed according to their respective projections.

Method M-100 and file F-100 may include various configurable settings to be adaptable to different environments. For example, where bandwidth or memory space is costly, the frames of projection one may be encoded with a high ratio of P and/or B-frames to I-frames, which may entail additional processing as a consequence. On the other hand, where image quality is more important than conserving bandwidth/memory space, a lower ratio of P and/or B-frames to I-frames may be used when encoding the frames of projection one. In addition, the techniques used to encode P-frames and B-frames may be modified to improve various aspects such as image quality, processing time, frame size, etc., each improvement having various tradeoffs associated therewith.

In embodiments of method M-100 having more than two projections with corresponding video streams, all frames encoded and stored in user data field F-104 may be encoded with reference to the corresponding frames stored in primary data field F-102. Alternatively, at least a portion of the frames stored in user data field F-104 may be encoded with reference to corresponding frames already stored in user data field F-104. For example, if projection one is a left-most projection of a scene, projection two is immediately to the right of projection one, and projection three is to the right of projection two, then compression rates and quality may potentially be improved by encoding projection three with reference to projection two instead of with reference to projection one since projection two is spatially closer and will thus have fewer pixel differences in its frames. Thus, after frame one of projection two is encoded and stored in primary data field F-102, frame one of projection three may be encoded with reference to the encoded frames of the second video projection stream in user data field F-104. Frames 2-"j" of projection three may then be encoded in a similar fashion. Furthermore, frames of a fourth projection may be encoded with reference to the encoded third projection frames, and so on until a last projection "n" is encoded with reference to the encoded "n-1" projection frames. Since a P-frame is generally less accurate than an I-frame in terms of picture quality, the video stream corresponding to a center-most projection may be encoded as the primary stream in primary data field F-102, thus providing I-frames as a reference for encoding both a left side projection and a right side projection.

Method M-100 may be implemented in hardware or executed as software/firmware by one or more processors or circuits associated with an encoding apparatus. Moreover, stages shown in method M-100 may be modified in various ways. For example, the order of stages may be varied, certain stages may be omitted and/or additional stages may be added. In certain embodiments, frames from every projection, not just those of projections two through "n," may be encoded in a temporal sequence. Thus, stage M-102 may be omitted and stage M-104 may be modified to include encoding the first frame of projection one as well as the first frame of all other projections. The subsequent stages may similarly be modified to include encoding of projection one's frames. To provide a reference frame for the compression of frames in projections two through "n," the frames of projection one may be encoded first in each stage.

In addition file F-100 may be formatted in various different ways. For example, although only one primary data field F-102 and one user data field F-104 are shown in Figure 1, file F-100 may include a plurality of packets, each containing their respective primary data fields and user data fields. Moreover, a packet may be encoded with only one frame in its primary data field and frame(s) from corresponding projection(s) in its user data field or with a plurality of frames in each primary data field and a single one or a plurality of user data fields corresponding to each primary data field. If a single user data field is used in association with each primary data field containing a plurality of frames, frames in the user data field may be indexed according to their temporal order and their respective projections. If multiple user data fields are used in association with a primary data field containing a plurality of frames, the number of user data fields may correspond to the number of frames contained in the primary data field so that each user data field contains the frame(s) temporally corresponding to one frame in the primary data field.

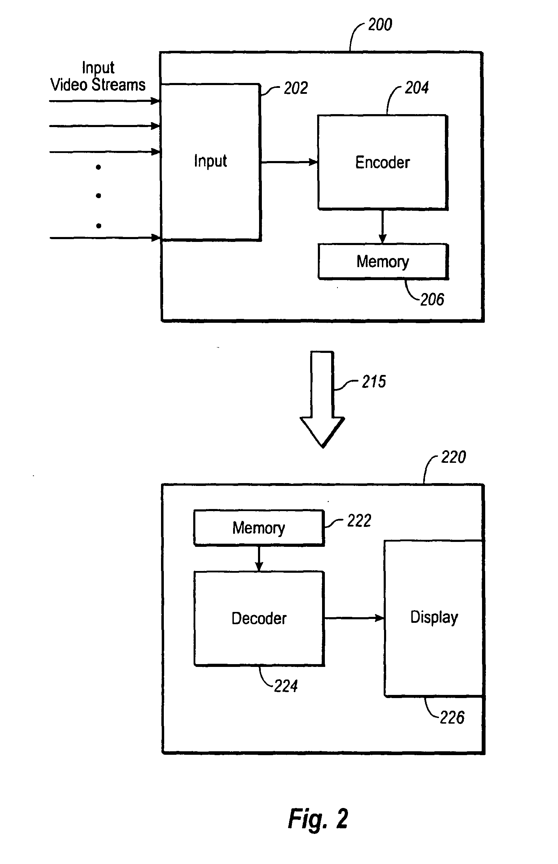

Figure 2 shows an exemplary video stream encoding system 200 and an exemplary video stream decoding system 220 for use with the method and video stream file format described in Figure 1. Encoding system 200 may include an input port 202 to receive input video streams, an encoder 204 adapted to encode the input video streams, and a memory device 206 adapted to store the encoded video streams.

Each input video stream corresponds to a different projection of a scene and may be received from one or more external devices, such as cameras or memory devices. When used with cameras, encoding system 200 may receive and encode input video streams in real time and input port 202 may include a bank of buffers. In certain embodiments, at least a portion of one or more of the projections may be computer generated graphics. Alternatively, a first projection may be received from a camera or may be at least partially computer generated and the other projections may be artificially generated or estimated based on the first projection. In addition, although input port 202 is depicted as receiving input video streams in parallel, some or all of the streams may instead be received in a serial fashion.

Encoder 204 may be adapted to compress at least one of the input video streams more than another at least one of input video streams. For example, as explained above with reference to method M-100, a video stream corresponding to a first projection may be encoded as a primary stream, including at least some I-frames, and stored in a primary data field of an MPEG-2 video file, such as file F-100. Video streams corresponding to other projections may include only P-frames and/or B-frames that reference the frames of the first video projection stream and are therefore compressed to a greater degree. In addition, encoder 204 may further be adapted to store the more compressed video streams independently from the first video projection stream in a user data field of an MPEG-2 video file. Thus the encoded video file may be compatible with a multi-view decoder and display as well as a standard single-view decoder and display because a decoder can optionally ignore data in the user data field during a decoding process.

Moreover, maintaining separate fields in a file for each video stream facilitates post-processing of individual projections before the projections are combined for display. For example, a video stream of one projection may need to be sharpened, or processed in some other fashion, before display on a multi-view display. If the unprocessed projections are simply combined in a single stream, neighboring pixels would correspond to different images. In that configuration, processing techniques such as sharpening of one projection could not be achieved because, like other image processing techniques, sharpening alters individual pixel values based on neighboring pixel values. On the other hand, if video streams corresponding to different projections are maintained in separate fields, a conventional sharpening process can more readily be applied to one projection without influence on or from other projections stored in other fields.

Once a video file has been encoded it may be transferred to one or more decoding systems, such as decoding system 220 via a transmission media 215. Transmission media 215 may be part of a wired or wireless network for transporting data, a transportable medium, such as a DVD disk, a CDROM disk, a flash memory card, or other storage medium, or a direct interface where, for example, encoding system 200 and decoding system 220 are integrated together in a single device or are adapted to be detachably connected to each other. If a transportable medium is used as transmission media 215, memory device 206 may be used to generate the transportable medium and memory device 222 may include a reader capable of accessing the transportable medium. Moreover, although memory device 206 of encoding system 200 and memory device 222 of decoding system 220 are shown integrated with their respective systems, one or both may be external devices adapted to be detachably connected to encoding system 200 and/or decoding system 220.

Decoding system 220 may include a memory device 222 adapted to store a portion of an MPEG-2 file, such as file F-100 of Figure 1, and a decoder 224 adapted to decode video streams stored in an MPEG-2 file and generate an output video stream. The MPEG-2 file may be formatted like file F-100 of Figure 1, e.g., with a video stream corresponding to a first projection in primary data fields and one or more video streams corresponding to one or more other projections in user data fields.

Decoder 224 may be adapted to decode one or more of the video streams and to generate an output video stream based on the first and second decoded video streams. The output video stream may be generated in conformance with a multi-view format for use with a multi-view display. For example, the multi-view format may be an interleaved format compatible with a multi-view display equipped with a parallax barrier. The output video stream may be sent to a display 226, which may be integrated with (as shown) or external to decoding system 220. Frame buffers corresponding to each projection (not shown) may also be included between decoder 224 and display 226 to store video streams as they are being decoded.

Encoding and decoding systems 200 and 220 may include other elements, inputs, and/or outputs than those shown in the illustrative embodiments of Figure 2. Moreover, encoding and decoding systems 200 and 220 can be implemented using hardware, software, firmware, or any combination thereof. For example, encoding and decoding systems 200 and 220 may include one or more circuits, such as dedicated processors, to carry out one or more functions of the functional blocks shown. As used herein, the term circuit may also include other components such as digital processors, analog processors, programmable logic arrays and devices, programmable array logic, field programmable gate/logic arrays, electrically erasable/programmable read only memory, microcontrollers, application specific circuits, etc. In certain embodiments consistent with the invention, the functions of the various functional blocks may also be implemented as one or more threads on a central circuit or processor of the electronic device. For example, encoder 204 may be implemented as a microprocessor configured to execute computer-executable instructions for encoding video streams in accordance with methods described herein. Decoder 224 may similarly be implemented as a programmable processor.

It will also be appreciated that while illustrated embodiments have been described in the context of a particular video compression protocol, MPEG-2 video compression, other forms of video compression, such as MPEG-1, MPEG-4 and others, might also be utilized.

Embodiments herein may comprise a special purpose or general-purpose computer including various computer hardware implementations. Embodiments may also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media.

Computer-executable instructions comprise, for example, instructions and data which cause a general purpose computer, special purpose computer, or special purpose processing device to perform a certain function or group of functions. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A method of processing a plurality of video streams, the method comprising:
encoding a first video stream corresponding to a first projection of a scene; and
encoding a second video stream corresponding to a second projection of the scene,
wherein a resulting encoded second video stream is compressed more than a resulting encoded first video stream.

2. The method as recited in claim 1, wherein the second video stream is encoded using at least a portion of the first video stream as a reference.

3. The method as recited in claim 1, wherein the second video stream is encoded to include more dependent frames than the first video stream, a dependent frame being a frame that is encoded using at least one other frame as a reference.

4. The method as recited in claim 3, wherein the dependent frames of the second video stream do not include intra frames.

5. The method as recited in claim 1, the method further including:
storing the first video stream in a primary data field of a file;
storing the second video stream in a supplemental data field of the file.

6. The method as recited in claim 4, wherein the supplemental data field is a vendor exclusive field that is optionally ignored during a decoding process.

7. The method as recited in claim 4, wherein the file is formatted such that the primary data field is independent of the supplemental data field.

8. The method as recited in claim 4, wherein the file is formatted to conform with a video file standard.

9. The method as recited in claim 7, wherein the video file standard is an MPEG standard.

10. The method as recited in claim 1, further including:
encoding a third video stream corresponding to a third projection of the scene,
wherein a resulting encoded third video stream is compressed more than the encoded first video stream.

11. The method as recited in claim 10, further including:
storing the third video stream in the supplemental data field.

12. A video stream encoding system comprising:
an input port adapted to receive a plurality of video streams, each video stream corresponding to a different projection of a scene;
an encoder adapted to encode the plurality of video streams,
wherein the encoder is adapted to compress at least one of the video streams more than another at least one of the video streams.

13. The video stream encoding system of claim 12, further comprising:
a memory device adapted to store the encoded video streams,
wherein the encoder is further adapted to store a first one of the encoded video streams in a first data field of a file on the memory device and to store a second one of the encoded video streams in a second data field of a file on the memory device.

14. The video stream encoding system of claim 12, wherein the encoder is further adapted to encode at least a portion of frames in the first one of the encoded video streams as intra frames and to encode all of the frames in the second one of the encoded video streams as predicted frames and/or bidirectional frames.

15. A video stream decoding system comprising:
a memory device adapted to store at least a portion of a file comprising a primary data field in which a first video stream corresponding to a first projection of a scene is stored and a supplemental data field in which a second video stream corresponding to a second projection of the scene is stored; and
a decoder adapted to decode the first and second video streams and to generate an output video stream based on the first and second decoded video streams.

16. The video stream decoding system of claim 15, wherein the decoder is adapted to generate the output video stream in conformance with a multi-view format.
